# EUROPEAN PATENT APPLICATION

(11) **EP 4 535 631 A1**
(43) Date of publication of application: **09.04.2025**
(21) Application number: 23811468.0
(22) Date of filing: 04.04.2023
(51) Int. Cl.: H02K 41/03

(54) **CYLINDRICAL LINEAR MOTOR**

(30) Priority: 27.05.2022 JP 2022086749
(71) Applicant: KYB Corporation, Minato-ku, Tokyo 105-5128 (JP)
(72) Inventor: KANO, Yoshiaki, Nagoya-shi, Aichi 457-8530 (JP); SATO, Kousuke, Tokyo 105-5128 (JP)
(74) Representative: MFG Patentanwälte Meyer-Wildhagen Meggle-Freund Gerhard PartG mbB
(86) International application number: PCT/JP2023/013904
(87) International publication number: WO 2023/228590

(57) **Abstract**

A tubular linear motor (1) according to the present invention includes a core assembly (5) including a core (7) made of a magnetic material and having a tubular yoke (7a) and a plurality of salient poles (7b) that is annular and arranged side by side along an axial direction on one of an inner circumference or an outer circumference of the yoke (7a), and the core assembly including a plurality of permanent magnets (6a, 6b) that are annular and attached to the core (7) so as to cause an N pole and an S pole to alternately appear in the axial direction, the core assembly including a magnet section (S1) in which the permanent magnets (6a, 6b) are installed and a magnet-free section (S2, S3) in which the salient poles (7b, 7b) are provided but the permanent magnets (6a, 6b) are not installed, and an armature (2) that is disposed on a salient pole (7b) side of an inner circumference or an outer circumference of the core assembly (5), is axially movable relative to the core assembly (5), and includes a plurality of windings (4) that is arranged side by side in an axial direction of the core assembly (5) and radially faces the core assembly (5).

## Description

### Technical Field

The present invention relates to a tubular linear motor.

### Background Art

For example, as disclosed in JP 2021-55821 A, there is provided a tubular linear motor including a rod, a tubular casing that surrounds the rod and is axially movable relative to the rod, a tubular casing-side coil array formed of a plurality of coils that are annular and stacked on an inner circumference of the tubular casing along the axial direction, a magnet array formed of a plurality of neodymium magnets that are annular and attached to an outer circumference of a central portion of the rod in a stacked manner, and an upper coil array and a lower coil array formed of a plurality of coils that are annular and attached to an outer circumference of the rod in a stacked manner above and below the magnet array so as to sandwich the magnet array.

In particular, the tubular linear motor with the configuration is interposed between a vehicle body and wheels of a vehicle to exert thrust to attenuate the vibration of the vehicle body. By the magnet array attached to the central portion of the rod facing the tubular casing-side coil array in the range from a state where the vehicle is unloaded to a state where the vehicle is fully loaded, the tubular linear motor can exert a large thrust. In the conventional tubular linear motor, in a case where the stroke amount increases, the upper coil array or the lower coil array is caused to face the tubular casing-side coil array, and not only the tubular casing-side coil array but also the upper coil array or the lower coil array is energized to use the upper coil array or the lower coil array as an electromagnet, so that the amount of use of the neodymium magnet is reduced and the cost is reduced accordingly.

### Citation List

### Patent Literature

Patent Literature 1: JP 2021-55821 A

### Summary of Invention

### Technical Problem

As described above, in the conventional tubular linear motor, the amount of use of the neodymium magnet is reduced by adopting the structure in which the magnet array formed of stacked neodymium magnets among the magnets constituting a field magnet is caused to face the tubular casing-side coil array only in the vicinity of the stroke center where a large thrust is desired to be obtained. However, since it is necessary to provide two coil arrays in which a large number of coils are stacked in addition to the magnet array on the field magnet side in addition to the tubular casing-side coil array on the armature side, the manufacturing cost is high, and further cost reduction is desired.

Therefore, an object of the present invention is to provide a tubular linear motor capable of reducing manufacturing cost.

### Solution to Problem

In order to achieve the above object, a tubular linear motor according to the present invention includes a core assembly including a core made of a magnetic material and having a tubular yoke and a plurality of salient poles that is annular and arranged side by side along an axial direction on one of an inner circumference or an outer circumference of the yoke, and the core assembly including a plurality of permanent magnets that are annular and attached to the core so as to cause an N pole and an S pole to alternately appear in the axial direction, the core assembly including a magnet section in which the permanent magnets are installed and a magnet-free section in which the salient poles are provided but the permanent magnets are not installed, and an armature that is disposed on a salient pole side of an inner circumference or an outer circumference of the core assembly, is axially movable relative to the core assembly, and includes a plurality of windings that is arranged side by side in an axial direction of the core assembly and radially faces the core assembly.

In a case where the armature faces the magnet section in the core assembly, the tubular linear motor with the configuration described above can generate thrust to drive the armature using the magnetic force of the permanent magnets, and in a case where the armature radially faces the magnet-free section of the core assembly, the tubular linear motor can generate thrust to drive the armature using reluctance thrust.

Therefore, even if the permanent magnets are not provided over the entire length of the core assembly, the tubular linear motor according to the present invention can generate thrust to axially move the armature relative to the core assembly as long as the armature faces the core assembly. In addition, the tubular linear motor according to the present invention can generate thrust to axially move the armature relative to the core assembly without providing windings in the magnet-free section of the core assembly in which the permanent magnets are not provided.

### Brief Description of Drawings

Fig. 1 is a longitudinal sectional view of a tubular linear motor according to one embodiment.
Fig. 2 is a cross-sectional view of a core assembly of a tubular linear motor according to a first modification of one embodiment.

### Description of Embodiments

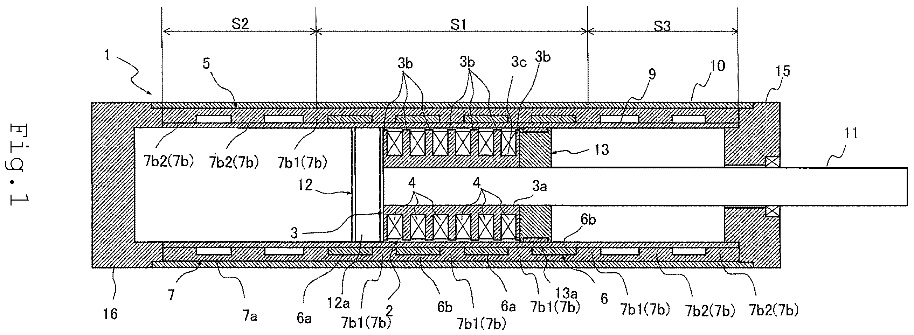

Hereinafter, the present invention will be described on the basis of an embodiment illustrated in the drawings. As illustrated in Fig. 1, a tubular linear motor 1 according to one embodiment includes a core assembly 5 including a core 7 made of a magnetic material and having a tubular yoke 7a and a plurality of annular salient poles 7b arranged side by side along an axial direction on an inner circumference of the yoke 7a, and a plurality of annular permanent magnets 6a and 6b attached to the core 7 in a manner that N poles and S poles alternately appear in the axial direction, and an armature 2 disposed on the inner circumference of the core assembly 5 on the salient pole 7b side and axially movable relative to the core assembly 5.

Hereinafter, each part of the tubular linear motor 1 will be described in detail. As described above, the core assembly 5 includes the core 7 and the plurality of permanent magnets 6a and 6b attached to the core 7.

The core 7 includes the tubular yoke 7a and the plurality of annular salient poles 7b arranged side by side along the axial direction on the inner circumference of the yoke 7a. In the tubular linear motor 1 of the present embodiment, the salient poles 7b of the core 7 are formed of annular protrusions along the circumferential direction of the yoke 7a, and are arranged side by side at equal pitches in the axial direction on the inner circumference of the yoke 7a. The salient poles 7b include a plurality of salient poles 7b1 arranged in a predetermined range in the central portion of the yoke 7a in Fig. 1, and a plurality of salient poles 7b2 arranged outside the predetermined range of the yoke 7a, that is, on the left and right in Fig. 1 of the predetermined range in the central portion. The axial width of the salient pole 7b2 disposed outside the predetermined range of the yoke 7a is larger than the axial width of the salient pole 7b1 disposed in the predetermined range of the central portion of the yoke 7a. In the tubular linear motor 1 of the present embodiment, the distances (pitches) from the axial centers of the salient poles 7b1 and 7b2 to the axial centers of the adjacent salient poles 7b1 and 7b2 are equal among all the salient poles, and the salient poles 7b1 and 7b2 are arranged on the yoke 7a at equal pitches in the axial direction.

The permanent magnets 6a and 6b are annular and radially magnetized, but are magnetized in directions opposite to each other. Therefore, the permanent magnet 6a has an inner circumferential side as an N pole and an outer circumferential side as an S pole, whereas the permanent magnet 6b has an inner circumferential side as an S pole and an outer circumferential side as an N pole. The axial lengths of the permanent magnets 6a and 6b are equal to each other, are substantially equal to the axial interval between the salient poles 7b1 and 7b1 arranged in the central portion of the yoke 7a, and are set to a length that enables the permanent magnet to be housed in the gap between the salient poles 7b1 and 7b1. The permanent magnet 6a and the permanent magnet 6b are alternately attached, on the inner circumference of the yoke 7a, one by one, in the individual gaps between the salient poles 7b1 and 7b1 installed in the predetermined range in the yoke 7a. Therefore, the permanent magnets 6a and 6b are alternately installed in the axial direction between the salient poles 7b1 and 7b1 located within the predetermined range in the yoke 7a, and a field magnet 6 in which N poles and S poles alternately appear is formed on the inner circumference of the core 7 by the permanent magnets 6a and 6b. Although not illustrated in detail, the core 7 is axially divided into a plurality of pieces, and even if the core 7 includes the salient poles 7b1 and 7b2, the permanent magnets 6a and 6b can be attached on the inner circumference of the core 7.

On the other hand, the permanent magnets 6a and 6b are not installed between the salient poles 7b1 and 7b2 and between the salient poles 7b2 and 7b2 located in a range other than the predetermined range of the yoke 7a. As described above, by installing the permanent magnets 6a and 6b in the predetermined range of the yoke 7a, a magnet section S1 in which the permanent magnets 6a and 6b are installed in the axial direction of the core 7 is provided, and two magnet-free sections S2 and S3 in which the permanent magnets 6a and 6b are not installed are respectively provided on both axial sides of the magnet section S1 of the core 7.

The core assembly 5 with such a configuration is housed in an annular gap formed between a cylindrical non-magnetic barrel 10 and a cylindrical non-magnetic inner tube 9 inserted into the barrel 10. Left ends of the barrel 10, the core assembly 5, and the inner tube 9 in Fig. 1 are closed by a cap 16, and right ends of the barrel 10, the core assembly 5, and the inner tube 9 in Fig. 1 are closed by an annular head cap 15.

The armature 2 includes a tubular armature core 3 and windings 4 attached to the armature core 3, and is inserted into the core assembly 5 so as to be movable in the axial direction. That is, in the present embodiment, the armature 2 is disposed on the inner circumferential side of the core assembly 5 and is axially movable relative to the core assembly 5.

In the present embodiment, the armature core 3 is made of a magnetic material, and includes a cylindrical portion 3a, a plurality of annular teeth 3b that are provided on the outer circumference, which is the field magnet side, of the cylindrical portion 3a along the circumferential direction at intervals in the axial direction and have a rectangular cross-section in the axial direction, and a slot 3c formed of a gap between the teeth 3b and 3b and to which the winding 4 is attached.

The cylindrical portion 3a has a cylindrical shape as described above, and the thickness of the cylindrical portion 3a is ensured in a manner that the cross-sectional area of the cylindrical portion 3a is equal to or larger than the cross-sectional area of a magnetic path in the teeth 3b.

In the present embodiment, as illustrated in Fig. 1, seven teeth 3b are arranged side by side at equal intervals in the axial direction on the outer circumference of the cylindrical portion 3a, and the slot 3c, formed of an annular groove, to which the winding 4 is attached is formed between the teeth 3b and 3b on the outer circumferential side, which is the field magnet 6 side, of the armature core 3. In the present embodiment, the cross-sectional shape of the teeth 3b is rectangular, but may be a trapezoid in which the width on the proximal end side that is the inner circumference is larger than the width on the distal end side that is the outer circumference so as to ensure a large cross-sectional area of the magnetic path on the proximal end side.

In the present embodiment, a total of six slots 3c formed of annular grooves are provided between the adjacent teeth 3b and 3b in Fig. 1. A plurality of the slots 3c are provided along the circumferential direction of the armature core 3, and are arranged at equal pitches in the axial direction on the outer circumference of the armature core 3.

The winding 4 is wound around and attached to the slot 3c. The windings 4 are three-phase windings of U phase, V phase and W phase. The windings 4 of the individual phases are attached to the six slots 3c so as to be suitably arranged depending on the magnetic pole arrangement of the field magnet 6.

The armature 2 with the configuration described above is attached to the outer circumference of the distal end of a rod 11 made of a non-magnetic material as an output shaft, and is movably inserted into the field magnet 6 together with the rod 11.

The rod 11 protrudes to the outside of the tubular linear motor 1 through the head cap 15 attached to the right end of the barrel 10 in Fig. 1. In addition, annular sliders 12 and 13 respectively including annular wear rings 12a and 13a slidably in contact with the inner circumference of the inner tube 9 on the outer circumferences are attached to the left and right of the armature 2 of the rod 11 in Fig. 1.

Since the armature 2 is sandwiched between the sliders 12 and 13 and fixed to the rod 11, and the sliders 12 and 13 are slidably inserted into the inner circumference of the inner tube 9, the armature 2 is not axially shaken with respect to the core assembly 5 and thus can move in the axial direction without interfering with the inner tube 9. In this manner, the movement of the armature 2 in the axial direction with respect to the core assembly 5 is guided by the inner tube 9.

As described above, the inner tube 9 plays a role of guiding the axial movement of the armature 2 in cooperation with the sliders 12 and 13. The outer diameter of the armature core 3 is smaller than the inner diameter of the inner tube 9 and the armature core does not interfere with the inner tube 9, and thus the tubular linear motor 1 can smoothly expand and contract.

Although not illustrated, the rod 11 has a tubular shape, and can supply electric power from an external power supply installed outside the tubular linear motor 1 to the windings 4 through an electric wire (not illustrated) passed through the rod 11.

The tubular linear motor 1 is configured as described above, and an operation of the tubular linear motor 1 will be described below. First, an operation in a case where the armature 2 radially faces the magnet section S1 of the core 7 will be described. In this case, the armature 2 radially faces the field magnet 6 including the permanent magnets 6a and 6b in the core 7, and thus by sensing the electrical angle of the winding 4 with respect to the field magnet 6, switching the energization phase on the basis of the electrical angle, and controlling the current amount of each winding 4 by PWM control, the thrust and the moving direction of the armature 2 in the tubular linear motor 1 can be controlled. The control method described above is an example, and it is not limited thereto. In addition, in a case an external force to relatively displace the armature 2 and the field magnet 6 in the axial direction is applied, the thrust to suppress the relative displacement can be generated by energizing the windings 4 or by an induced electromotive force generated in the windings 4 to cause the tubular linear motor 1 to dampen the vibration and motion of the device due to the external force, and the energy regeneration that generates electric power from the external force is also possible. As described above, in a case where the armature 2 faces the magnet section S1 in the core 7, the tubular linear motor 1 can generate thrust to axially move the armature 2 relative to the core assembly 5 by using the attractive force or the repulsive force generated between the permanent magnets 6a and 6b and the armature 2 in the field magnet 6 by energizing the windings 4 of the armature 2. Therefore, in a case where the armature 2 faces the magnet section S1 in the core 7, the tubular linear motor 1 can generate a large thrust using the magnetic force of the permanent magnets 6a and 6b.

On the other hand, in a case where the armature 2 radially faces the magnet-free sections S2 and S3 of the core 7, the tubular linear motor 1 can magnetize the teeth 3b axially shifted from the salient poles 7b2 by energizing the windings 4, generate reluctance thrust between the core 7 and the armature 2, and generate thrust to axially move the armature 2 with respect to the core assembly 5.

In the case of the present embodiment, since the salient pole 7b1 is also provided in the magnet section S1, reluctance thrust can be generated by energizing the windings 4 of the armature 2. However, in a case where the armature 2 faces the magnet section S1 in the core 7, as described above, the tubular linear motor 1 generates thrust to drive the armature 2 mainly using the magnetic force of the permanent magnets 6a and 6b. On the other hand, in a case where the armature 2 radially faces the magnet-free sections S2 and S3 of the core 7, the tubular linear motor 1 generates thrust to drive the armature 2 by the reluctance thrust generated between the teeth 3b and the salient poles 7b1 in the armature 2.

As described above, the tubular linear motor 1 of the present embodiment includes the core assembly 5 having the core 7 made of a magnetic material and having the tubular yoke 7a and the plurality of annular salient poles 7b1 and 7b2 arranged side by side along the axial direction on the inner circumference of the yoke 7a, and the plurality of annular permanent magnets 6a and 6b attached to the core 7 in a manner that N poles and S poles alternately appear in the axial direction, the core assembly 5 including the magnet section S1 in which the permanent magnets 6a and 6b are installed and the magnet-free sections S2 and S3 in which the salient poles 7b2 and 7b2 are provided but the permanent magnets 6a and 6b are not installed, and the tubular linear motor including the armature 2 that is disposed on the inner circumference, which is the salient pole 7b side, of the core assembly 5 and is axially movable relative to the core assembly 5, and has the plurality of windings 4 that is arranged side by side in the axial direction of the core assembly 5 and radially faces the core assembly 5.

In a case where the armature 2 faces the magnet section S1 in the core assembly 5, the tubular linear motor 1 with the configuration described above can generate thrust to drive the armature 2 using the magnetic force of the permanent magnets 6a and 6b, and in a case where the armature 2 radially faces the magnet-free sections S2 and S3 of the core assembly 5, the tubular linear motor can generate thrust to drive the armature 2 using reluctance thrust.

Therefore, even if the permanent magnets 6a and 6b are not provided over the entire length of the core assembly 5, the tubular linear motor 1 can generate thrust to axially move the armature 2 relative to the core assembly 5 as long as the armature 2 faces the core assembly 5. In addition, the tubular linear motor 1 of the present embodiment can generate thrust to axially move the armature 2 relative to the core assembly 5 without providing windings in the magnet-free sections S2 and S3 of the core assembly 5 in which the permanent magnets 6a and 6b are not provided.

As described above, according to the tubular linear motor 1 of the present embodiment, the number of parts can be reduced as compared with the conventional tubular linear motor in which windings need to be provided at the location where the permanent magnet is not provided, and thus the manufacturing cost can be largely reduced.

In the tubular linear motor 1 of the present embodiment, the axial width of the salient pole 7b1 in the magnet section S1 is different from the axial width of the salient pole 7b2 in the magnet-free sections S2 and S3. According to the tubular linear motor 1 with the configuration described above, since the axial width of the salient pole 7b1 is different from the salient pole 7b2, it is possible to set the axial width of the salient pole 7b2 to a width suitable for maximizing the thrust when the armature 2 faces the magnet-free sections S2 and S3 while the axial width of the salient pole 7b1 is set to a width suitable for maximizing the thrust when the armature 2 faces the magnet section S1. Therefore, in the tubular linear motor 1 with the configuration described above, it is possible to improve thrust by optimizing the axial width of the salient poles 7b1 and 7b2.

In the tubular linear motor 1 of the present embodiment, the axial width of the salient pole 7b2 in the magnet-free sections S2 and S3 is wider than the axial width of the salient pole 7b1 in the magnet section S1. According to the tubular linear motor 1 with the configuration described above, since the axial width of the salient pole 7b2 is wide in the magnet-free sections S2 and S3 so that reluctance thrust is advantageously generated, the thrust when the armature 2 faces the magnet-free sections S2 and S3 can be improved.

In the above description, the axial width of the salient pole 7b1 disposed in the magnet section S1 is different from the axial width of the salient pole disposed in the magnet-free sections S2 and S3, but the axial width of the salient pole 7b1 may be equal to the axial width of the salient pole 7b2.

The axial width of the salient pole 7b2 disposed in the magnet-free section S2 may be different from the axial width of the salient pole 7b2 disposed in the magnet-free section S3, or some or all of the axial widths of the salient poles 7b2 arranged in the magnet-free sections S2 and S3 may be different from each other.

Although not illustrated, the depth of the groove (the portion between the salient poles 7b1 and 7b1 of the core 7) for forming the salient pole 7b1 in the magnet section S1 may be different from the depth of the grooves (the portions between the salient poles 7b2 and 7b2 and between the salient poles 7b1 and 7b2 of the core 7) for forming the salient pole 7b2 in the magnet-free sections S2 and S3. According to the tubular linear motor 1 with the configuration described above, since the depth of the groove for forming the salient pole 7b1 in the magnet section S1 is different from the depth of the groove for forming the salient pole 7b2 in the magnet-free sections S2 and S3, the depth of the groove for forming the salient pole 7b1 in the magnet section S1 can be set to a depth suitable for maximizing the thrust when the armature 2 faces the magnet section S1, and the same time, the depth of the groove for forming the salient pole 7b2 in the magnet-free sections S2 and S3 can be set to a depth suitable for maximizing the thrust when the armature 2 faces the magnet-free sections S2 and S3. Therefore, in the tubular linear motor 1 with the configuration described above, it is possible to improve thrust by optimizing the depth of each groove described above.

The depth of the groove for forming the salient pole 7b2 in the magnet-free sections S2 and S3 may be deeper than the depth of the groove for forming the salient pole 7b1 in the magnet section S1. According to the tubular linear motor 1 with the configuration described above, in the magnet-free sections S2 and S3, the depth of the groove for forming the salient pole 7b2 is increased so that reluctance thrust is advantageously generated, and thus the thrust when the armature 2 faces the magnet-free sections S2 and S3 can be improved.

As described above, the thrust of the tubular linear motor 1 may be maximized by making the depth of the groove for forming the salient pole 7b1 disposed in the magnet section S1 different from the depth of the groove for forming the salient pole 7b2 disposed in the magnet-free sections S2 and S3, but the depths of the grooves may be set to be the same.

An auxiliary salient pole may be provided between the salient poles 7b2 and 7b2 and between the salient poles 7b1 and 7b2 arranged at equal pitches in the magnet-free sections S2 and S3 in order to improve reluctance thrust and reduce cogging thrust.

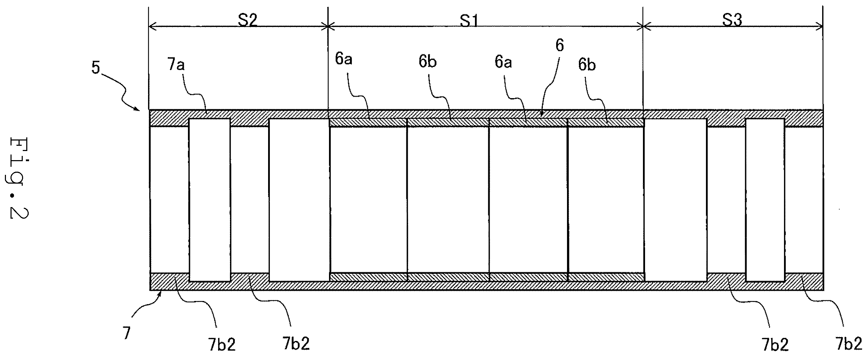

In a case where the tubular linear motor 1 does not need to generate thrust caused by reluctance thrust when the armature 2 faces the magnet section S1, the salient pole 7b1 belonging to the magnet section S1 of the core 7 may be eliminated as illustrated in Fig. 2. In this case, the permanent magnets in the magnet section S1 are alternately stacked with the permanent magnets magnetized in the radial direction and the permanent magnets magnetized in the axial direction in a Halbach array, so that a stronger magnetic field can be applied to the armature 2, and the thrust of the tubular linear motor 1 when the armature 2 radially faces the magnet section S1 can be further improved. Although not illustrated, the core 7 may have a structure in which only two salient poles 7b1 arranged at both ends of the magnet section S1 are provided in the core 7 and no salient pole is provided between the permanent magnets 6a and 6b.

In the tubular linear motor 1 of the present embodiment, the magnet section S1 is provided in the central portion of the core assembly 5 facing the stroke center when the armature 2 strokes in the axial direction. According to the tubular linear motor 1 with the configuration described above, in a case where the tubular linear motor 1 is used as a shock absorber that is interposed between a vehicle body and wheels of an automobile or a straddled vehicle to suppress vibration of the vehicle body, or in a case where the tubular linear motor 1 is used as a damper that is horizontally interposed between a vehicle body and a truck of a railway vehicle to suppress left-right vibration of the vehicle body, a large thrust can be generated by the magnetic force of the permanent magnets 6a and 6b when the armature 2 vibrates with respect to the core assembly 5 in the vicinity of the stroke center, so that the vibration of the vehicle body can be efficiently suppressed. Therefore, the tubular linear motor 1 of the present embodiment is optimal as a shock absorber for a vehicle or a damper for a railway vehicle. In a case where the tubular linear motor 1 is used as a shock absorber that is interposed between a vehicle body and wheels of an automobile or a straddled vehicle to suppress vibration of the vehicle body, in a state where the tubular linear motor 1 is interposed between the vehicle body and the wheels of the vehicle loaded with a live load reflecting the live load of passengers on the vehicle and loads loaded on the vehicle, the permanent magnets 6a and 6b may be installed in the core 7 with the range facing the range in which the armature 2 frequently strokes with the stroke center that is a position where the armature 2 faces the core assembly 5 as the center, as the magnet section S1.

In the tubular linear motor 1 of the present embodiment, the magnet section S1 is provided in the central portion of the core assembly 5. However, since the position of the magnet section S1 in the core assembly 5 is preferably set to a position facing the stroke range of the armature 2 in which the tubular linear motor 1 is expected to generate a large thrust, the position of the magnet section S1 in the core assembly 5 may be set depending on the characteristics of machines, apparatuses, or structures in which the tubular linear motor 1 is installed. Therefore, the magnet section S1 may be provided at a plurality of locations instead of one location in the core assembly 5, and the installation position on the core assembly 5 is not limited to the central portion. The installation locations and the number of the magnet-free sections S2 and S3 can be changed in design depending on the installation position of the magnet section S1 in the core assembly 5.

Although the tubular linear motor 1 of the present embodiment is structured to provide the armature 2 on the inner circumference of the core assembly 5, it is also possible to adopt a structure in which the tubular armature 2 is provided on the outer circumference of the core assembly 5. In this case, the annular salient poles 7b1 and 7b2 may be provided on the outer circumference of the yoke 7a of the core 7, the permanent magnets 6a and 6b may be attached on the outer circumference of the yoke 7a in the magnet section S1 of the core assembly 5, the teeth 3b may be provided on the inner circumference of the armature core 3 of the armature 2, and the winding 4 may be attached between the teeth 3b. Even when the tubular linear motor is configured in this manner, the tubular linear motor can generate a large thrust using the magnetic force of the permanent magnets 6a and 6b when the armature 2 faces the magnet section S1 of the core assembly 5, and can generate thrust using reluctance thrust when the armature 2 faces the magnet-free sections S2 and S3 of the core assembly 5. Therefore, according to the tubular linear motor with the structure in which the armature 2 is provided on the outer circumference of the core assembly 5 as described above, the number of parts can be reduced as compared with the conventional tubular linear motor in which the winding needs to be provided at a location where the permanent magnet is not provided, and thus the manufacturing cost can be largely reduced.

Although the preferred embodiment of the present invention has been described above in detail, modifications, variations, and changes can be made thereto without departing from the claims.

### Reference Signs List

1 Tubular linear motor
2 Armature
4 Winding
5 Core assembly
6a, 6b Permanent magnet
7 Core
7a Yoke
7b, 7b1, 7b2 Salient pole
S1 Magnet section
S2, S3 Magnet-free section

## Claims

1. A tubular linear motor comprising:
a core assembly including a core made of a magnetic material and having a tubular yoke and a plurality of salient poles that is annular and arranged side by side along an axial direction on one of an inner circumference or an outer circumference of the yoke, and the core assembly including a plurality of permanent magnets that is annular and attached to the core so as to cause an N pole and an S pole to alternately appear in the axial direction, the core assembly including a magnet section in which the permanent magnets are installed and a magnet-free section in which the salient poles are provided but the permanent magnets are not installed; and
an armature that is disposed on a salient pole side of an inner circumference or an outer circumference of the core assembly, is axially movable relative to the core assembly, and includes a plurality of windings that is arranged side by side in an axial direction of the core assembly and radially faces the core assembly.

2. The tubular linear motor according to claim 1, wherein
the core assembly includes the salient poles in the magnet section, and
an axial width of each of the salient poles or a depth of a groove for forming the salient pole in the magnet section is different from an axial width of each of the salient pole or a depth of a groove for forming the salient pole in the magnet-free section.

3. The tubular linear motor according to claim 2, wherein the axial width of the salient pole in the magnet-free section is wider than the axial width of the salient pole in the magnet section.

4. The tubular linear motor according to claim 2, wherein the depth of the groove for forming the salient pole in the magnet-free section is deeper than the depth of the groove for forming the salient pole in the magnet section.

5. The tubular linear motor according to any one of claims 1 to 4, wherein the magnet section is installed in a central portion of the core assembly facing a stroke center of the armature.
